# EUROPÄISCHE PATENTSCHRIFT

(11) **EP 3 631 607 B1**
(45) Veröffentlichungstag und Bekanntmachung des Hinweises auf die Patenterteilung: **23.06.2021**
(21) Anmeldenummer: 18710477.3
(22) Anmeldetag: 14.03.2018
(51) Int. Cl.: G06F 3/041, B32B 17/10

(54) **VERBUNDGLASSCHEIBE UND VERFAHREN ZU DEREN HERSTELLUNG**
COMPOSITE PANEL AND METHOD FOR ITS MANUFACTURE
VITRE COMPOSITE ET SON PROCÉDÉ DE FABRICATION

(30) Priorität: 24.05.2017 EP 17172764
(43) Veröffentlichungstag der Anmeldung: 08.04.2020
(73) Patentinhaber: SAINT-GOBAIN GLASS FRANCE, 92400 Courbevoie (FR)
(72) Erfinder: WEBER, Patrick, 52477 Alsdorf (DE); KLAUSS, Bastian, 52072 Aachen (DE); ZEISS, Michael, 52134 Herzogenrath (DE); EFFERTZ, Christian, 52080 Aachen (DE)
(74) Vertreter: Gebauer, Dieter Edmund
(86) Internationale Anmeldenummer: PCT/EP2018/056373
(87) Internationale Veröffentlichungsnummer: WO 2018/215106

(56) Entgegenhaltungen:
- DE-A1-102004 054 465

## Beschreibung

Die Erfindung betrifft eine Verbundglasscheibe und Verfahren zu deren Herstellung.

### Hintergrund der Erfindung

Im Bereich der Fahrzeugtechnik wird eine Vielzahl von Scheiben verwendet. Dabei ist ein zunehmender Wunsch festzustellen unterschiedliche Funktionen in die Scheiben zu integrieren.

So wird z.B. in zunehmenden Maße versucht, elektrische Elemente, insbesondere Sensoren, z.B. Regensensoren, Beleuchtungssensoren, Abstandssensoren, etc. als auch Bedienelemente, wie z.B. Berührungsschalter / Näherungsschalter als auch Anzeigenelemente in die Scheiben zu integrieren. Beispielsweise ist aus der internationalen Patentanmeldung WO 2015/ 162 107 A1 ein Glaspanel mit einer beleuchteten Schaltfläche und Heizfunktion bekannt.

Weiterhin ist aus der internationalen Patentanmeldung WO 2013 / 053 611 A1 eine Glasscheibe mit einer elektro-chromen Beschichtung und einem Sensor bekannt.

Zudem ist aus der DE 10 2004 054 465 A1 ein optischer Feuchtigkeitsensor zur Detektion von Feuchtigkeit auf der Außenseite und/oder der Innenseite einer Glasscheibe bekannt. Um den optischen Feuchtigkeitsensor auch in einem wischergereinigten Wischfeld einer Windschutzscheibe anordnen zu können wird ein transparent ausgebildeter Sender bzw. Empfänger bereitgestellt.

Mit zunehmender Zahl solcher Sensoren wird jedoch die Platzierung derselben zunehmend schwierig. Dies ist unter anderem darin begründet, dass Sensoren zu einer Störung der optischen Eigenschaften der Glasscheibe führen.

Zudem ist festzustellen, dass seitlich benachbart angeordnet Sensoren sich gegenseitig beeinflussen können. Aus dieser Erfahrung heraus wird ein genügend großer Abstand angestrebt.

Dennoch besteht weiterhin Bedarf an einer Platzierung von Sensoren ohne die bisherigen Beschränkungen.

### Kurzdarstellung der Erfindung

Die Aufgabe wird gelöst durch eine Verbundglasscheibe aufweisend eine erste Glas-Schicht und eine zweite Glas-Schicht verbunden durch eine Kombinationsfolie, wobei zwischen der ersten Glas-Schicht und der zweiten Glas-Schicht zumindest eine erste elektrisch leitende Struktur und eine zweite elektrisch leitende Struktur angeordnet sind, wobei die erste elektrisch leitende Struktur und die zweite elektrisch leitende Struktur beabstandet zueinander angeordnet sind, wobei die erste elektrisch leitende Struktur die zweite elektrisch leitende Struktur in einer senkrechten Ausrichtung in Bezug auf die erste Glas-Schicht zumindest teilweise überlappt, wobei die erste elektrisch leitende Struktur einem ersten elektrischen Element zugeordnet ist, wobei das erste elektrische Element ein kapazitiver Sensor ist, wobei die erste elektrisch leitende Struktur und die zweite elektrisch leitende Struktur auf zumindest einer Inlet-Folie angeordnet sind.

Mit der erfindungsgemäßen Verbundglasscheibe wird eine Möglichkeit geschaffen den bisherigen Beschränkungen zu entgehen.

In einer Ausführungsform der Erfindung ist die zweite elektrisch leitende Struktur einem zweiten elektrischen Element, insbesondere einem opto-elektronischen Bauelement, einem Sensor oder einem Nahfeldkommunikationsschaltkreis oder einer Antenne zugeordnet.

D.h. mit unterschiedlichen Elementen können eine Vielzahl unterschiedlicher Funktionen bereitgestellt werden.

In einer weiteren Ausführungsform der Erfindung weist die Verbundglasscheibe zumindest teilweise am Ort der ersten elektrisch leitenden Struktur einen Schwarzdruck auf.

D.h. zumindest Teile der elektrisch leitenden Struktur können optisch verborgen sein.

Gemäß einer weiteren Ausführungsform der Erfindung enthält die Kombinationsfolie zumindest einen Stoff ausgewählt aus der Gruppe aufweisend Polybutylenterephthalat (PBT), Polycarbonat (PC), Polyethylenterephthalat (PET) und Polyethylennaphthalat (PEN), Polyvinylchlorid (PVC), Polyvinylfluoride (PVF), Polyvinylbutyral (PVB), Ethylenvinylacetat (EVA), Polyacrylat (PA), Polymethylmethacrylat (PMMA), Polyurethan (PUR), und/oder Gemische und Copolymere davon.

D.h. die Erfindung erlaubt die vielseitige Anpassung an unterschiedliche optische und mechanische Gegebenheiten.

Gemäß noch einer weiteren Ausführungsform der Erfindung weist die Verbundglasscheibe weiterhin einen elektrischen Anschluss an die erste elektrisch leitende Struktur und/oder die zweite elektrisch leitende Struktur auf, wobei der Anschluss durch eine der Glas-Schichten oder am Rand der Glas-Schichten angeordnet ist.

Somit erlaubt die Erfindung eine freie Gestaltung der Sensoren und deren Anschlüsse, womit der Gestaltung eine Vielzahl von Freiheitsgraden zur Verfügung gestellt wird.

Gemäß der Erfindung sind die erste elektrisch leitende Struktur und die zweite elektrisch leitende Struktur auf zumindest einer Inlet-Folie angeordnet.

Damit können die elektrisch leitenden Strukturen kostengünstig vorproduziert werden und in den Herstellungsprozess eingebunden werden. Mit der Anordnung auf zumindest einem Inlet werden sowohl einseitig strukturierte als auch zweiseitige strukturierte Inlets verwendbar.

Gemäß noch einer weiteren Ausführungsform der Erfindung sind die erste elektrisch leitende Struktur und die zweite elektrisch leitende Struktur auf zumindest einer Inlet-Folie angeordnet, wobei die zumindest eine Inlet-Folie (15, 25) Polyethylenterephthalat aufweist.

Somit kann die Herstellung innerhalb typischer Materialzusammenstellungen erfolgen.

In einer weiteren Ausführungsform der Erfindung sind die erste elektrisch leitende Struktur und die zweite elektrisch leitende Struktur auf einer Inlet-Folie angeordnet, wobei die Inlet-Folie eine gefaltete Folie aufweist.

Einseitig strukturierte Inlets können besonders kostengünstig hergestellt werden, wobei das Inlet auf einer Seite beide Strukturen aufweist. Vor dem Einbringen wird das Inlet gefaltet, sodass die elektrischen Strukturen außen liegend angeordnet sind.

In noch einer weiteren Ausführungsform der Erfindung sind die erste elektrisch leitende Struktur auf der ersten Glas-Schicht und die zweite elektrisch leitende Struktur auf der zweiten Glas-Schicht angeordnet. Auch in diesem Fall ergibt sich eine kostengünstige Produktion, da nunmehr beide Glas-Schichten getrennt einseitig mit der jeweiligen Struktur hergestellt werden können.

Gemäß noch einer weiteren Ausformung der Erfindung kann die erfindungsgemäße Verbundglas-Scheibe in Fahrzeugen oder Gebäuden oder als Informationsdisplay verwendet werden. D.h. die Anwendungsbreite ist sehr hoch, sodass die erfindungsgemäße Verbundglas-Scheibe kostengünstig hergestellt werden kann.

In einer weiteren Ausgestaltung der Erfindung wird ein Verfahren zur Herstellung einer Verbundglasscheibe bereitgestellt. Das Verfahren weist einen Schritt des Erhaltens einer ersten Glas-Schicht und einer zweiten Glas-Schicht, den Schritt des Erhaltens einer ersten Inlet-Folie mit einer ersten elektrischen Struktur und einer zweiten Inlet-Folie mit einer zweiten elektrischen Struktur auf.

Weiterhin weist das Verfahren den Schritt des Anordnens der ersten Inlet-Folie relativ zur ersten Glas-Schicht auf, sodass die erste elektrische Struktur näher zur ersten Glas-Schicht ist. Weiterhin weist das Verfahren den Schritt des Anordnens der zweiten Inlet-Folie relativ zur zweiten Glas-Schicht auf, sodass die zweite elektrische Struktur näher zur zweiten Glas-Schicht ist. Weiterhin weist das Verfahren den Schritt des Anordnens der Kombinationsfolie zwischen der ersten Glas-Schicht und der zweiten Glas-Schicht auf.

Weiterhin weist das Verfahren der Schritt des Verbindens der angeordneten Schichten unter Einfluss von Wärme auf.

In einer weiteren Ausgestaltung der Erfindung wird ein weiteres Verfahren zur Herstellung einer Verbundglasscheibe bereitgestellt. Das Verfahren weist einen Schritt des Erhaltens einer ersten Glas-Schicht und einer zweiten Glas-Schicht, und den Schritt des Erhaltens einer Inlet-Folie mit einer ersten elektrischen Struktur und einer zweiten elektrischen Struktur auf. Das Verfahren weist einen Schritt des Faltens der Inlet-Folie auf, sodass die erste elektrische Struktur und die zweite elektrische Struktur sich zumindest teilweise überlappen. In einem weiteren Schritt wird die Inlet-Folie relativ zur ersten Glas-Schicht so angeordnet, dass die erste elektrische Struktur näher zur ersten Glas-Schicht und die zweite elektrische Struktur näher zur zweiten Glas-Schicht ist. Weiterhin weist das Verfahren den Schritt des Anordnens der Kombinationsfolie zwischen der ersten Glas-Schicht und der zweiten Glas-Schicht auf.

Weiterhin weist das Verfahren den Schritt des Verbindens der angeordneten Schichten unter Einfluss von Wärme auf.

Mit den vorgestellten Verfahren kann besonders kostengünstig und einfach produziert werden während zugleich der gestalterische Freiraum bei der Platzierung der elektrischen Elemente nicht beschränkt wird.

### Kurzdarstellung der Zeichnungen

Ausführungsformen der vorliegenden Erfindung werden in exemplarischer Weise mit Bezug auf die angehängten Zeichnungen beschrieben, in denen zeigt:
- Fig. 1: eine schematische Schnitt-Darstellung einer Verbundglasscheibe, welche nicht Teil der Erfindung ist,
- Fig. 2: eine schematische Schnitt-Darstellung einer erfindungsgemäßen Verbundglasscheibe,
- Fig. 3: eine schematische Schnitt-Darstellung eines Details der Erfindung,
- Fig. 4: eine schematische Schnitt-Darstellung eines weiteren Details der Erfindung, und
- Fig. 5: ein Flussdiagramm mit Schritten gemäß erfindungsgemäßer Verfahren.

### Ausführliche Darstellung der Erfindung in Bezug auf die Zeichnungen

Nachfolgend wird die Erfindung eingehender unter Bezugnahme auf die Figur dargestellt werden. Dabei ist anzumerken, dass unterschiedliche Aspekte beschrieben werden, die jeweils einzeln oder in Kombination zum Einsatz kommen können. D.h. jeglicher Aspekt kann mit unterschiedlichen Ausführungsformen der Erfindung verwendet werden soweit nicht explizit als reine Alternative dargestellt.

In den nachfolgend beschriebenen Verfahren können einzelne Schritte in einem einzigen Schritt verkörpert sein und z.B. parallel zueinander ausgeführt werden. Zudem kann die Reihenfolge von Verfahrensschritten variieren, sodass die vorgestellte Reihenfolge der Verfahrensschritte nicht als zwingend anzusehen ist, es sei denn es wird eine bestimmte Reihenfolge als explizit notwendig beschrieben.

Weiterhin können die Verfahren auch gemischt Anwendung finden.

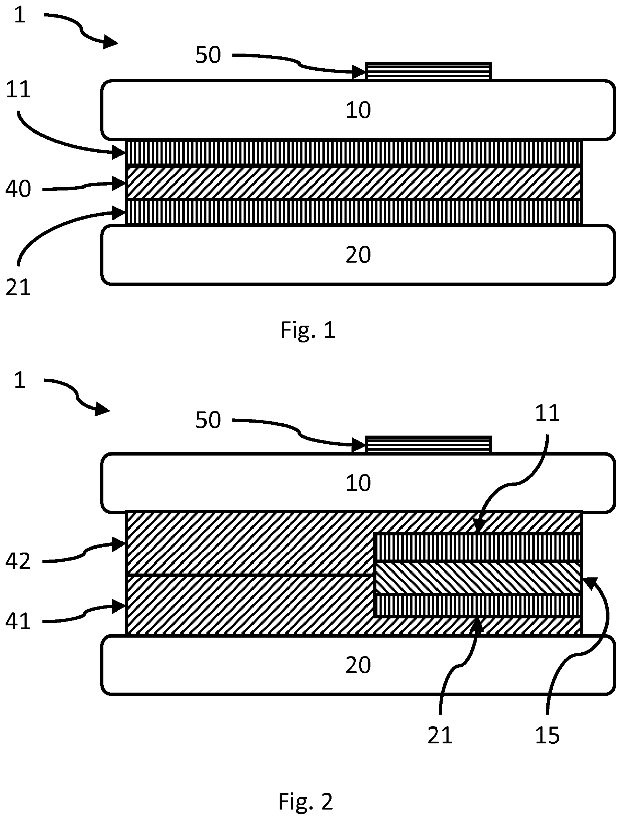

In Figur 2 ist eine erfindungsgemäße Verbundglasscheibe 1 gezeigt. Die Verbundglasscheibe 1 weist eine erste Glas-Schicht 10 und eine zweite Glas-Schicht 20 auf. Zwischen der ersten Glas-Schicht 10 und der zweiten Glas-Schicht 20 sind zumindest eine erste elektrisch leitende Struktur 11 und eine zweite elektrisch leitende Struktur 21 angeordnet.

Dabei sind die erste elektrisch leitende Struktur 11 und die zweite elektrisch leitende Struktur 21 beabstandet zueinander angeordnet, wobei die erste elektrisch leitende Struktur 11 die zweite elektrisch leitende Schicht in einer normalen / senkrechten Ausrichtung in Bezug auf die erste Glas-Schicht 10 zumindest teilweise überlappt.

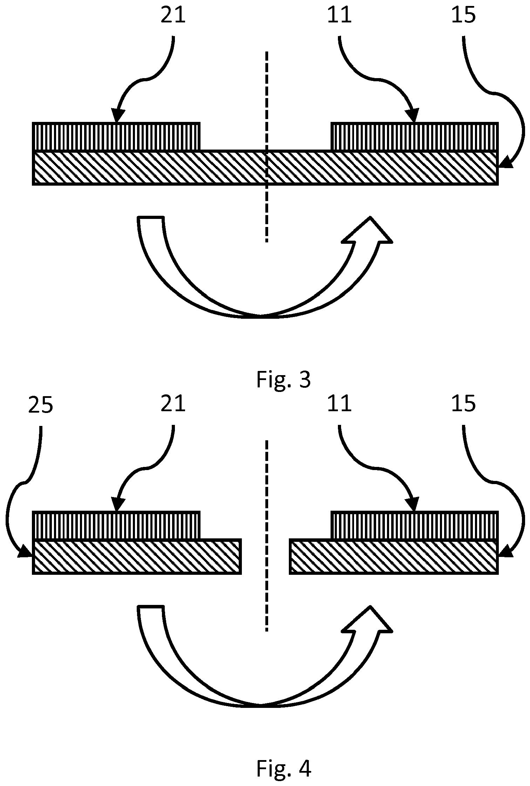

In Figur 1 ist die erste elektrisch leitende Struktur 11 entweder auf der ersten Glas-Schicht 10 oder auf einer Seite einer Kombinationsfolie 40 angeordnet, während die zweite elektrisch leitende Struktur 21 entweder auf der zweiten Glas-Schicht 20 oder auf einer anderen Seite der Kombinationsfolie 40 angeordnet ist. Natürlich könnten auch zwei Kombinationsfolien mit jeweiligen einseitigen Strukturen vorgesehen sein, wie es später in Zusammenhang mit Figur 3 am Beispiel eines Inlets 15 erläutert werden wird. Somit sind die beiden Strukturen zumindest durch die Kombinationsfolie 40 zueinander beabstandet.

In Figur 2 sind die erste elektrisch leitende Struktur 11 und die zweite elektrisch leitende Struktur 21 durch das Inlet 15 beabstandet.

Dabei ist die erste elektrisch leitende Schicht 11 einem ersten elektrischen Element zugeordnet.

Das erste elektrische Element ist ein kapazitiver Sensor, wie z.B. ein Regensensor oder ein Berührungssensor.

Die Erfindung macht sich dabei die Erkenntnis zu Nutze, dass eine elektrische Beeinflussung im Wesentlichen an den Randbereichen der jeweiligen elektrischen Strukturen auftritt, während bei einer zumindest teilweisen Überdeckung der strukturierten Bereiche Abschirmungseffekte stärker zur Geltung kommen. Somit können unterschiedliche Strukturen überlappend angeordnet werden, wobei sich durch die Überlappung eine zweckmäßige Entkopplung ergibt. Dies kann z.B. für ein verbessertes Schaltverhalten oder für eine erhöhte Sensitivität verwendet werden. Zudem erlaubt die überlappende Anordnung eine Reduktion von optisch gestörten Flächen bei gleichzeitiger Vergrößerung der für die Sicht als auch für elektrische Strukturen nutzbaren Flächen insgesamt.

Mit der erfindungsgemäßen Verbundglasscheibe wird eine Möglichkeit geschaffen, den bisherigen Beschränkungen zu entgehen.

In einer Ausführungsform der Erfindung ist die zweite elektrisch leitende Schicht 21 einem zweiten elektrischen Element, insbesondere einem opto-elektronischen Bauelement, z.B. einer Leuchtdiode, einem Sensor oder einem Nahfeldkommunikationsschaltkreis oder einer Antenne zugeordnet.

D.h. mit unterschiedlichen elektrischen Elementen können eine Vielzahl unterschiedliche Funktionen, z.B. Sensorik und/oder Anzeige, bereitgestellt werden.

In einer Ausführungsform der Erfindung weist die Verbundglasscheibe 1 zumindest teilweise am Ort der ersten elektrisch leitenden Struktur 11 einen Schwarzdruck 50 auf.

D.h. zumindest Teile der elektrisch leitenden Struktur können optisch verborgen sein.

In einer weiteren Ausführungsform der Erfindung weist die Verbundglasscheibe 1 weiterhin zwischen der ersten Glas-Schicht 10 und der zweiten Glas-Schicht 20 zumindest eine Kombinationsfolie 40, 41, 42 auf.

Beispielsweise sind in der Ausführungsform der Figur 1 eine Kombinationsfolie 40 und in der Ausführungsform der Figur 2 zwei Kombinationsfolien 41 und 42 gezeigt. Dabei sind die erfindungsgemäßen Verbundglasscheiben nicht auf eine oder zwei Kombinationsfolien beschränkt, sondern es können beliebig viele Kombinationsfolien eingebracht werden. Jede Kombinationsfolie kann zudem auch noch andere Funktionalitäten, wie z.B. Antireflexbeschichtungen, etc. aufweisen.

Die Kombinationsfolien 40, 41, 42 enthalten zumindest einen Stoff ausgewählt aus der Gruppe aufweisend Polybutylenterephthalat (PBT), Polycarbonat (PC), Polyethylenterephthalat (PET) und Polyethylennaphthalat (PEN), Polyvinylchlorid (PVC), Polyvinylfluoride (PVF), Polyvinylbutyral (PVB), Ethylenvinylacetat (EVA), Polyacrylat (PA), Polymethylmethacrylat (PMMA), Polyurethan (PUR), und/oder Gemische und Copolymere davon.

D.h. die Erfindung erlaubt die vielseitige Anpassung an unterschiedliche optische und mechanische Gegebenheiten.

Weiterhin ist in Ausführungsformen der Erfindung ein elektrischer Anschluss an die erste elektrisch leitende Schicht 11 und/oder die zweite elektrisch leitende Schicht 21 zur Verfügung gestellt, wobei der Anschluss durch eine der Glas-Schichten 10, 20 oder am Rand der Glas-Schichten 10, 20 angeordnet ist.

Somit erlaubt die Erfindung eine freie Gestaltung der Sensoren und deren Anschlüsse, womit der Gestaltung eine Vielzahl von Freiheitsgraden zur Verfügung gestellt wird.

Beispielsweise kann das erste elektrische Element ein Regensensor und das zweite elektrische Element ein Berührungs-/Näherungssensor oder eine Statusanzeige sein.

In einer Ausführungsform, welche näher in Zusammenhang mit den Figuren 2-4 beschrieben werden wird, sind die erste elektrisch leitende Struktur 11 und die zweite elektrisch leitende Struktur 21 auf zumindest einem Inlet 15, 25 angeordnet. Das Inlet bildet insofern eine weitere Schicht.

Das Inlet 15, 25 kann z.B. ein geeignet dimensionierter Streifen sein, der zwischen die Glas-Schichten 10, 20 und - soweit vorhanden auch zwischen zwei Kombinationsfolien 41, 42 - eingelegt wird. Die räumliche Erstreckung kann kleiner als die räumliche Erstreckung der Glas-Schichten 10, 20 sein, wie z.B. in Figur 2 gezeigt. Die Bereitstellung von geeigneten elektrischen Strukturen auf einem Inlet 15 anstatt auf einer Kombinationsfolie 40 erlaubt die Herstellung der elektrischen Strukturen in großer Stückzahl und deren flexible Einbringung.

Die elektrisch leitenden Strukturen können, wie in Figur 2 angedeutet, beidseitig auf einem Inlet 15 angeordnet sein. Es ist jedoch auch möglich, eine vergleichbare Anordnung durch Umklappen eines Inlet 15 - wie in Figur 3 gezeigt - oder durch zwei getrennte Inlets, Inlet 15 mit der ersten elektrisch leitenden Struktur 11 und Inlet 25 mit der zweiten elektrisch leitenden Struktur 21, die so zusammengelegt werden, dass die die erste elektrisch leitende Struktur 11 und die zweite elektrisch leitende Struktur 21 nach außen zeigen, zur Verfügung zu stellen.

Das Inlet 15 bzw. die Inlets 15,25 weisen beispielsweise " Polyethylenterephthalat auf. Andere Materialien, insbesondere ie Materialien der Kombinationsfolie 40, 41, 42, sind jedoch gleichfalls als Trägermaterial für die erste elektrisch leitende Struktur 11 bzw. die zweite elektrisch leitende Struktur 21 verwendbar. Gemäß noch einer weiteren Ausformung der Erfindung kann die erfindungsgemäße Verbundglas-Scheibe in Fahrzeugen oder Gebäuden oder als Informationsdisplay verwendet werden. D.h. die Anwendungsbreite ist sehr hoch, sodass die erfindungsgemäße Verbundglas-Scheibe kostengünstig hergestellt werden kann.

Nachfolgend werden Verfahren skizziert, mit denen die Basisfunktionalität der Verbundglasscheibe 1 - wie zuvor beschrieben - hergestellt werden können. Dabei unterscheiden sich die Verfahren je nachdem, wo bestimmte elektrische Elemente angeordnet sind. Es sei jedoch nochmals darauf hingewiesen, dass die einzelnen Verfahren Mischformen derselben nicht ausschließen. Dabei sind Mischformen sowohl in der vertikalen Ausrichtung als auch in der horizontalen Ausrichtung möglich. Dabei kann z.B. für Mischformen sprechen, dass bestimmte Funktionen präziser und/oder kostengünstiger mit einem Verfahren hergestellt werden können, während andere Funktionen mit einem anderen Verfahren kostengünstiger und/oder präziser hergestellt werden können. D.h., dem Fachmann sind alle Freiheitsgrade der Gestaltung gegeben und ein Verfahren schließt ein anderes Verfahren nicht aus.

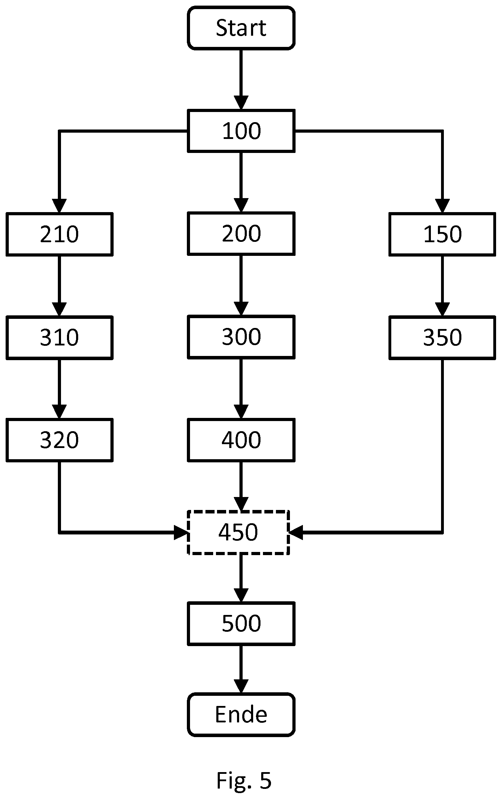

Die Verfahren sind dabei in einem gemeinsamen Ablaufdiagramm gemäß Figur 5 dargestellt.

In einem ersten Schritt 100, der allen Verfahren gemeinsam ist, werden die erste Glas-Schicht 10 und die zweite Glas-Schicht 20 erhalten.

Nachfolgend unterscheiden sich die Verfahren in der Art und Weise, wo bestimmte Funktionen angeordnet sind.

Im ersten Fall wird angenommen, dass die erste elektrische Struktur 11 auf einer ersten Inlet-Folie 15 und die zweite elektrische Struktur 21 auf einer zweiten Inlet-Folie 25 angeordnet ist, wie z.B. in Figur 4 gezeigt.

Dann werden zunächst die erste Inlet-Folie 15 mit der ersten elektrischen Struktur 11 und die zweite Inlet-Folie 25 mit der zweiten elektrischen Struktur 21 in Schritt 200 erhalten. Anschließend wird in Schritt 300 die erste Inlet-Folie 15 relativ zur ersten Glas-Schicht 10 so angeordnet, dass die erste elektrische Struktur 11 näher zur ersten Glas-Schicht 10 ist. In einem Schritt 400 wird die zweite Inlet-Folie 25 relativ zur zweiten Glas-Schicht 20 so angeordnet, sodass die zweite elektrische Struktur 21 näher zur zweiten Glas-Schicht 20 ist. Das Anordnen in den Schritten 300 und 400 kann z.B. ein Auflegen beinhalten, wobei die Reihenfolge der Schritte 300 und 400 durch die Schichtfolge vorgeben ist. Alternativ ist es natürlich auch möglich die Schritte 300 und 400 zu kombinieren und z.B. die zwei Inlets 15 und 25 in einem ersten Schritt relativ zueinander anzuordnen und optional vorzuverbinden und anschließend auf die entsprechende Glas-Schicht 20 bzw. Kombinationsfolie 41 in der entsprechenden Orientierung aufzulegen.

Im zweiten Fall wird angenommen, dass die erste elektrische Struktur 11 und die zweite elektrische Struktur 21 auf einer Inlet-Folie 15 angeordnet sind, wie z.B. in Figur 3 gezeigt.

Dann wird zunächst in Schritt 210 die Inlet-Folie 15 mit einer ersten elektrischen Struktur 11 und einer zweiten elektrischen Struktur 12 erhalten. Anschließend wird die Inlet-Folie 15 an geeigneter Stelle - in Figur 3 angedeutet durch die gestrichelte Linie - in einem Schritt 310 gefaltet, sodass die erste elektrische Struktur 11 und die zweite elektrische Struktur 21 sich zumindest teilweise überlappen. Der Schritt des Faltens 310 kann natürlich auch vorgezogen werden, sodass für die Produktion ein vorgefaltetes und optional vorverbundenes Inlet 15 erhalten wird. In einem Schritt 320 wird die gefaltete Inlet-Folie 15 relativ zur ersten Glas-Schicht 10 so angeordnet, dass die erste elektrische Struktur 11 näher zur ersten Glas-Schicht 10 und die zweite elektrische Struktur 21 näher zur zweiten Glas-Schicht 20 ist. Es sei dabei angemerkt, dass der Schritt 320 des Anordnens auch mit dem Schritt des Faltens 310 kombiniert ausgeführt sein kann. Das Anordnen in Schritten 320 kann z.B. ein Auflegen beinhalten. In einem dritten Fall, welcher nicht Teil der Erfindung ist, wird angenommen, dass die erste elektrische Struktur 11 auf der ersten Glas-Schicht 10 und die zweite elektrische Struktur 21 auf der zweiten Glas-Schicht 20 angeordnet ist, wie z.B. in Figur 1 gezeigt.

Dann wird zunächst in einem Schritt 150 die erste elektrische Struktur 11 auf der ersten Glas-Schicht 10 und die zweite elektrische Struktur 21 auf der zweiten Glas-Schicht 20 strukturiert. Hierzu können geeignete Druckverfahren, Ätzverfahren, mechanischer Abtrag, Laserabtrag, etc. verwendet werden. Der Schritt 150 kann auch geeignet zeitlich vor Schritt 100 angeordnet sein. In einem Schritt 350 werden sodann die erste Glas-Schicht 10 und die zweite Glas-Schicht 20 so angeordnet, dass die erste elektrische Struktur 11 und die zweite elektrische Struktur 21 "innenliegend" angeordnet sind.

In einem weiteren Schritt 500, der wiederum allen Verfahren gemeinsam ist, werden die angeordneten Schichten unter Einfluss von Wärme verbunden.

In einem optionalen Schritt 450, der vor Schritt 500 zeitlich einzuordnen ist, und der auch Bestandteil der Schritte 300, 400, 320, 350 sein kann, wird zumindest eine Kombinationsfolie 40; 41, 42 zwischen der ersten Glas-Schicht 10 und der zweiten Glas-Schicht 20 angeordnet.

Die Kombinationsfolie 40, 41, 42 kann dabei zum einen zur Verbindung dienen, zum anderen können der Kombinationsfolien auch andere Funktionen, wie z.B. eine Isolationsfunktion (z.B. zwischen der ersten und der zweiten elektrisch leitenden Struktur 11 bzw. 21) oder Trägerfunktionen für andere funktionale Schichten zukommen.

Mit den vorgestellten Verbundglasscheiben 1 und deren Herstellungsverfahren ist es insbesondere möglich sowohl einen Regensensor als auch einen Berührungssensor/Näherungssensor bereitzustellen, wobei der Regensensor durch die zweite elektrisch leitende Struktur 21 bereitgestellt wird und in Richtung der zweiten Glas-Schicht 20 misst, während der Berührungssensor/Näherungssensor durch die erste elektrisch leitende Struktur 11 bereitgestellt wird und in Richtung der ersten Glas-Schicht 10 misst. D.h. am gleichen Ort können unterschiedliche Funktionen mit reduziertem Materialaufwand und gegebenenfalls gemeinsamen Anschlüssen realisiert werden.

Dabei können z.B. die elektrischen Strukturen 11, 21 auf geeigneten Inlets 15, 25 zur Verfügung gestellt werden und bei Bedarf in den Fertigungsprozess eingebunden werden.

Durch die zumindest teilweise Überlappung der Sensoren wird der Platzbedarf reduziert.

Mit den vorgestellten Ausführungsformen ist es möglich, die elektrischen Strukturen 11 21 für Sensoren z.B. nahe an den Glas-Schichten 10, 20 zu platzieren. Eine derartige Platzierung hat für (kapazitive) Sensoren, wie z.B. Berührungssensoren / Regensensoren den Vorteil einer Verbesserung des asymmetrischen Effekts. Weiterhin stellt die jeweilige andere elektrische Struktur eine schirmende Wirkung zur Verfügung, sodass z.B. eine Bedienung eines Berührungssensors/Näherungssensors nur von der jeweiligen gewünschten Glas-Schicht aus möglich ist.

Ohne Beschränkung der Allgemeinheit können die elektrischen Strukturen 11 und 21 durch eine gemeinsame Auswerte-Elektronik, die auch auf einem Inlet 15, 25 angeordnet sein kann, angesteuert und ausgewertet werden.

Zudem ist es möglich zumindest Teile der elektrischen Strukturen 11, 21 so zu platzieren, dass sie unter einem Schwarzdruck 50 angeordnet sind. Solch ein Schwarzdruck ist häufig bei Fahrzeugscheiben im Randbereich anzutreffen. Durch eine zumindest teilweise Anordnung unter dem Schwarzdruck 50 können optische Störungen vermieden werden. Offensichtlich ist dies nicht für alle Funktionen sinnvoll.

Es zeigt sich zudem, dass gleichartige geformte Abschnitte der ersten elektrischen Struktur 11 und der zweiten elektrischen Struktur 21 zu einer weiteren Verminderung optischer Störungen führen, wenn diese nahezu übereinanderliegend angeordnet sind.

Insbesondere kann z.B. durch eine geeignete (z.B. alternierende) Ansteuerung der ersten und zweiten elektrischen Strukturen 11, 21 erreicht werden, dass z.B. eine elektrische Struktur ein schirmendes Massepotential zur Verfügung stellt, während die andere elektrische Struktur ein zu messendes anderes Potential zur Verfügung stellt. So kann z.B. zwischen einem Regensensor und einem Berührungssensor, welche auf unterschiedlichen Seiten der Glas-Schichten 10, 20 messen sollen, umgeschaltet werden, wobei jeweils eine hohe Sensitivität bei gleichzeitiger Schirmung gegen Fehlmessungen (kapazitive Änderungen auf der jeweils nicht zu messenden Seite) unterdrückt werden.

Ohne Beschränkung der Allgemeinheit können die elektrischen Strukturen 11, 21 auch für andere Funktionen, wie z.B. (Mobilfunk-, Rundfunk-, GPS-) Antennen, Beleuchtung, Heizung verwendet werden, wobei insbesondere auch räumliche Kombinationen von Schalt- und Anzeigeelementen vorteilhafterweise kombiniert werden können.

### Bezugszeichenliste

1 Verbundglasscheibe
10 erste Glas-Schicht
11 erste elektrisch leitende Struktur
15, 25 Inlet
20 zweite Glas-Schicht
21 zweite elektrisch leitende Struktur
40, 41, 42 Kombinationsfolie
50 Schwarzdruck Verfahrensschritte
100 Erhalten einer ersten Glas-Schicht und einer zweiten Glas-Schicht
200 Erhalten einer ersten Inlet-Folie und einer zweiten Inlet-Folie
300 Anordnen der ersten Inlet-Folie
400 Anordnen der zweiten Inlet-Folie
500 Verbinden der angeordneten Schichten
210 Erhalten einer Inlet-Folie
310 Falten der Inlet-Folie
320 Anordnen der Inlet-Folie
150 Strukturieren einer ersten elektrischen Struktur und einer zweiten elektrischen Struktur
300 Anordnen der ersten Glas-Schicht und der zweiten Glas-Schicht
450 Anordnen zumindest einer Kombinationsfolie

## Patentansprüche

1. Verbundglasscheibe (1) aufweisend eine erste Glas-Schicht (10) und eine zweite Glas-Schicht (20) verbunden durch eine Kombinationsfolie (41, 42), wobei zwischen der ersten Glas-Schicht (10) und der zweiten Glas-Schicht (20) zumindest eine erste elektrisch leitende Struktur (11) und eine zweite elektrisch leitende Struktur (21) angeordnet sind, wobei die erste elektrisch leitende Struktur (11) und die zweite elektrisch leitende Struktur (21) beabstandet zueinander angeordnet sind, wobei die erste elektrisch leitende Struktur (11) die zweite elektrisch leitende Struktur (21) in einer senkrechten Ausrichtung in Bezug auf die erste Glas-Schicht (10) zumindest teilweise überlappt, wobei die erste elektrisch leitende Struktur (11) einem ersten elektrischen Element zugeordnet ist, wobei das erste elektrische Element ein kapazitiver Sensor ist, wobei die erste elektrisch leitende Struktur (11) und die zweite elektrisch leitende Struktur (21) auf zumindest einer Inlet-Folie (15, 25) angeordnet sind.

2. Verbundglasscheibe nach Anspruch 1, **dadurch gekennzeichnet, dass** die zweite elektrisch leitende Struktur einem zweiten elektrischen Element, insbesondere einem opto-elektronischen Bauelement, einem Sensor oder einem Nahfeldkommunikationsschaltkreis oder einer Antenne zugeordnet ist.

3. Verbundglasscheibe (1) nach einem der vorhergehenden Ansprüche, **dadurch gekennzeichnet, dass** die Verbundglasscheibe zumindest teilweise am Ort der ersten elektrisch leitenden Struktur (11) einen Schwarzdruck (50) aufweist.

4. Verbundglasscheibe (1) nach einem der vorhergehenden Ansprüche, **dadurch gekennzeichnet, dass** die Kombinationsfolie zumindest einen Stoff ausgewählt aus der Gruppe aufweisend Polybutylenterephthalat (PBT), Polycarbonat (PC), Polyethylenterephthalat (PET) und Polyethylennaphthalat (PEN), Polyvinylchlorid (PVC), Polyvinylfluoride (PVF), Polyvinylbutyral (PVB), Ethylenvinylacetat (EVA), Polyacrylat (PA), Polymethylmethacrylat (PMMA), Polyurethan (PUR), und/oder Gemische und Copolymere davon enthält.

5. Verbundglasscheibe (1) nach einem der vorhergehenden Ansprüche, **dadurch gekennzeichnet, dass** die Verbundglasscheibe (1) weiterhin einen elektrischen Anschluss an die erste elektrisch leitende Struktur (11) und/oder die zweite elektrisch leitende Struktur (21) aufweist, wobei der Anschluss durch eine der Glas-Schichten (10, 20) oder am Rand der Glas-Schichten (10, 20) angeordnet ist.

6. Verbundglasscheibe (1) nach einem der vorhergehenden Ansprüche 1 bis 5, **dadurch gekennzeichnet, dass** die zumindest eine Inlet-Folie (15, 25) Polyethylenterephthalat aufweist.

7. Verbundglasscheibe (1) nach einem der vorhergehenden Ansprüche 1 bis 6, **dadurch gekennzeichnet, dass** die Inlet-Folie (15) eine gefaltete Folie aufweist.

8. Verbundglasscheibe (1) nach einem der vorhergehenden Ansprüche 1 bis 5, **dadurch gekennzeichnet, dass** die erste elektrisch leitende Struktur (11) auf der ersten Glas-Schicht (10) und die zweite elektrisch leitende Struktur (21) auf der zweiten Glas-Schicht (20) angeordnet sind.

9. Verwendung einer Verbundglasscheibe (1) nach einem der Ansprüche 1 bis 8 in Fahrzeugen oder Gebäuden oder als Informationsdisplay.

10. Verfahren zur Herstellung einer Verbundglasscheibe (1) nach einem der vorherigen Ansprüche 1 bis 6, aufweisend die Schritte:
- Erhalten (100) einer ersten Glas-Schicht (10) und einer zweiten Glas-Schicht (20),
- Erhalten (200) einer ersten Inlet-Folie (15) mit einer ersten elektrischen Struktur (11) und einer zweiten Inlet-Folie (25) mit einer zweiten elektrischen Struktur (21),
- Anordnen (300) der ersten Inlet-Folie (15) relativ zur ersten Glas-Schicht (10), sodass die erste elektrische Struktur (11) näher zur ersten Glas-Schicht (10) ist,
- Anordnen (400) der zweiten Inlet-Folie (25) relativ zur zweiten Glas-Schicht (20), sodass die zweite elektrische Struktur (21) näher zur zweiten Glas-Schicht (20) ist,
- Anordnen (450) der Kombinationsfolie (41, 42) zwischen der ersten Glas-Schicht (10) und der zweiten Glas-Schicht (20),
- Verbinden (500) der angeordneten Schichten unter Einfluss von Wärme.

11. Verfahren zur Herstellung einer Verbundglasscheibe (1) nach Anspruch 7, aufweisend die Schritte:
- Erhalten (100) einer ersten Glas-Schicht (10) und einer zweiten Glas-Schicht (20),
- Erhalten (210) einer Inlet-Folie (15) mit einer ersten elektrischen Struktur (11) und einer zweiten elektrischen Struktur (21),
- Falten (310) der Inlet-Folie (15), sodass die erste elektrische Struktur (11) und die zweite elektrische Struktur (21) sich zumindest teilweise überlappen,
- Anordnen (320) der Inlet-Folie (15) relativ zur ersten Glas-Schicht (10), sodass die erste elektrische Struktur (11) näher zur ersten Glas-Schicht (10) und die zweite elektrische Struktur (21) näher zur zweiten Glas-Schicht (20) ist,
- Anordnen (450) der Kombinationsfolie (41, 42) zwischen der ersten Glas-Schicht (10) und der zweiten Glas-Schicht (20),
- Verbinden (500) der angeordneten Schichten unter influss von Wärme.

## Claims

1. Laminated glass pane (1) having a first glass layer (10) and a second glass layer (20) bonded by a combination film (41, 42), wherein at least one first electrically conducting structure (11) and a second electrically conducting structure (21) are arranged between the first glass layer (10) and the second glass layer (20), wherein the first electrically conducting structure (11) and the second electrically conducting structure (21) are arranged spaced apart from one another, wherein the first electrically conducting structure (11) at least partially overlaps the second electrically conducting structure (21) in a perpendicular orientation relative to the first glass layer (10), wherein the first electrically conducting structure (11) is associated with a first electrical element, wherein the first electrical element is a capacitive sensor, wherein the first electrically conducting structure (11) and the second electrically conducting structure (21) are arranged on at least one inlet film (15, 25).

2. Laminated glass pane according to claim 1, **characterized in that** the second electrically conducting strucuture is associated with a second electrical element, in particular an optoelectronic component, a sensor, or a near-field communication circuit or an antenna.

3. Laminated glass pane (1) according to one of the preceding claims, **characterized in that** the laminated glass pane has a black print (50) at least partially at the location of the first electrically conducting structure (11).

4. Laminated glass pane (1) according to one of the preceding claims, **characterized in that** the combination film contains at least one material selected from the group comprising polybutylene terephthalate (PBT), polycarbonate (PC), polyethylene terephthalate (PET) and polyethylene naphthalate (PEN), polyvinyl chloride (PVC), polyvinyl fluorides (PVF), polyvinyl butyral (PVB), ethylene vinyl acetate (EVA), polyacrylate (PA), polymethyl methacrylate (PMMA), polyurethane (PUR), and/or mixtures and copolymers thereof.

5. Laminated glass pane (1) according to one of the preceding claims, **characterized in that** the laminated glass pane (1) further has an electrical connection to the first electrically conducting structure (11) and/or the second electrically conducting structure (21), wherein the connection is arranged through one of the glass layers (10, 20) or at the edge of the glass layers (10, 20).

6. Laminated glass pane (1) according to one of the preceding claims 1 through 5, **characterized in that** the at least one inlet film (15, 25) has polyethylene terephthalate.

7. Laminated glass pane (1) according to one of the preceding claims 1 through 6, **characterized in that** the inlet film (15) has a folded film.

8. Laminated glass pane (1) according to one of the preceding claims 1 through 5, **characterized in that** the first electrically conducting structure (11) is arranged on the first glass layer (10) and the second electrically conducting structure (21) is arranged on the second glass layer (20).

9. Use of a laminated glass pane (1) according to one of claims 1 through 8 in vehicles or buildings or in an information display.

10. Method for producing a laminated glass pane (1) according to one of the preceding claims 1 through 6, comprising the steps:
- obtaining (100) a first glass layer (10) and a second glass layer (20),
- obtaining (200) a first inlet film (15) having a first electrical structure (11) and a second inlet film (25) having a second electrical structure (21),
- aranging (300) the first inlet film (15) relative to the first glass layer (10) such that the first electrical structure (11) is closer to the first glass layer (10),
- arranging (400) the second inlet film (25) relative to the second glass layer (20) such that the second electrical structure (21) is closer to the second glass layer (20),
- arranging (450) the combination foil (41, 42) between the first glass layer (10) and the second glass layer (20),
- bonding (500) the arranged layers under the influence of heat.

11. Method for producing a laminated glass pane (1) according to claim 7, comprising the steps:
- obtaining (100) a first glass layer (10) and a second glass layer (20),
- obtaining (210) an inlet film (15) having a first electrical structure (11) and a second electrical structure (21),
- folding (310) the inlet film (15) such that the first electrical structure (11) and the second electrical structure (21) at least partially overlap one another,
- arranging (320) the inlet film (15) relative to the first glass layer (10) such that the first electrical structure (11) is closer to the first glass layer (10) and the second electrical structure (21) is closer to the second glass layer (20),
- arranging (450) the combination film (41, 42) between the first glass layer (10) and the second glass layer (20),
- bonding (500) the arranged layers under the influence of heat.

## Revendications

1. Vitrage en verre feuilleté (1) comprenant une première couche de verre (10) et une deuxième couche de verre (20) liées par un film film de combinaison (41, 42), dans lequel au moins une première structure électriquement conductrice (11) et une deuxième structure électriquement conductrice (21) sont disposées entre la première couche de verre (10) et la deuxième couche de verre (20), dans lequel la première structure électriquement conductrice (11) et la deuxième structure électriquement conductrice (21) sont disposées à distance l'une de l'autre, la première structure électriquement conductrice (11) recouvrant au moins partiellement la deuxième structure électriquement conductrice (21) dans une orientation perpendiculaire à la première couche de verre (10), la première structure électriquement conductrice (11) étant associée à un premier élément électrique, le premier élément électrique étant un capteur capacitif, la première structure électriquement conductrice (11) et la deuxième structure électriquement conductrice (21) étant disposées sur au moins un film d'entrée (15, 25).

2. Vitrage en verre feuilleté selon la revendication 1, **caractérisé en ce que** la deuxième structure électriquement conductrice est associée à un deuxième élément électrique, notamment un composant optoélectronique, un capteur, ou un circuit de communication en champ proche ou une antenne.

3. Vitrage en verre feuilleté (1) selon l'une des revendications précédentes, **caractérisé en ce que** le vitrage en verre feuilleté présente une impression noire (50) au moins partiellement à l'emplacement de la première structure électriquement conductrice (11).

4. Vitrage en verre feuilleté (1) selon l'une des revendications précédentes, **caractérisé en ce que** le film de combinaison contient au moins un matériau choisi dans le groupe comprenant le polybutylène téréphtalate (PBT), le polycarbonate (PC), le polyéthylène téréphtalate (PET) et le polyéthylène naphtalate (PEN), le polychlorure de vinyle (PVC), les polyfluorures de vinyle (PVF), le polyvinylbutyral (PVB), l'éthylène-acétate de vinyle (EVA), le polyacrylate (PA), le polyméthacrylate de méthyle (PMMA), le polyuréthane (PUR), et/ou leurs mélanges et copolymères.

5. Vitrage en verre feuilleté (1) selon l'une des revendications précédentes, **caractérisée en ce que** la vitre en verre feuilleté (1) présente en outre une connexion électrique avec la première structure électriquement conductrice (11) et/ou la deuxième structure électriquement conductrice (21), la connexion étant disposée à travers l'une des couches de verre (10, 20) ou au bord des couches de verre (10, 20).

6. Vitrage en verre feuilleté (1) selon l'une des revendications précédentes 1 à 5, **caractérisé en ce que** l'au moins un film d'entrée (15, 25) comporte du polyéthylène téréphtalate.

7. Vitrage en verre feuilleté (1) selon l'une des revendications précédentes 1 à 6, **caractérisé en ce que** le film d'entrée (15) a un film plié.

8. Vitrage en verre feuilleté (1) selon l'une des revendications précédentes 1 à 5, **caractérisé en ce que** la première structure électriquement conductrice (11) est disposée sur la première couche de verre (10) et la deuxième structure électriquement conductrice (21) est disposée sur la deuxième couche de verre (20).

9. Utilisation d'une vitrage en verre feuilleté (1) selon l'une des revendications 1 à 8 dans des véhicules ou des bâtiments ou dans un affichage d'informations.

10. Procédé de fabrication d'un vitrage en verre feuilleté (1) selon l'une des revendications précédentes 1 à 6, comprenant les étapes suivantes :
- obtention (100) d'une première couche de verre (10) et d'une deuxième couche de verre (20),
- obtenir (200) un premier film d'entrée (15) ayant une première structure électrique (11) et un second film d'entrée (25) ayant une seconde structure électrique (21),
- disposer (300) le premier film d'entrée (15) par rapport à la première couche de verre (10) de telle sorte que la première structure électrique (11) soit plus proche de la première couche de verre (10),
- disposer (400) le deuxième film d'entrée (25) par rapport à la deuxième couche de verre (20) de telle sorte que la deuxième structure électrique (21) soit plus proche de la deuxième couche de verre (20),
- disposer (450) le film de combinaison (41, 42) entre la première couche de verre (10) et la deuxième couche de verre (20),
- coller (500) les couches disposées sous l'influence de la chaleur.

11. Procédé de fabrication d'une vitrage en verre feuilleté (1) selon la revendication 7, comprenant les étapes suivantes :
- obtention (100) d'une première couche de verre (10) et d'une deuxième couche de verre (20),
- obtention (210) d'un film d'entrée (15) ayant une première structure électrique (11) et une seconde structure électrique (21),
- plier (310) le film d'entrée (15) de telle sorte que la première structure électrique (11) et la seconde structure électrique (21) se recouvrent au moins partiellement l'une l'autre,
- disposer (320) le film d'entrée (15) par rapport à la première couche de verre (10) de telle sorte que la première structure électrique (11) soit plus proche de la première couche de verre (10) et que la deuxième structure électrique (21) soit plus proche de la deuxième couche de verre (20),
- disposer (450) le film de combinaison (41, 42) entre la première couche de verre (10) et la seconde couche de verre (20),
- coller (500) les couches disposées sous l'influence de la chaleur.
